# EUROPEAN PATENT SPECIFICATION

(11) **EP 3 688 383 B1**
(45) Date of publication and mention of the grant of the patent: **18.11.2026**
(21) Application number: 18786513.4
(22) Date of filing: 21.09.2018
(51) Int. Cl.: F25B 1/00

(54) **TWO STEP OIL MOTIVE EDUCTOR SYSTEM**
ZWEISCHRITTMOTOREJEKTORSYSTEM FÜR ÖL
SYSTÈME D'ÉJECTEUR MOTEUR À HUILE À DEUX ÉTAPES

(30) Priority: 25.09.2017 US 201762562895 P
(43) Date of publication of application: 05.08.2020
(73) Proprietor: Johnson Controls Tyco IP Holdings LLP, Milwaukee, WI 53209 (US)
(72) Inventor: SHEAFFER, Bryson L., York Pennsylvania 17403 (US); SNELL, Paul W., York Pennsylvania 17402 (US)
(74) Representative: Meissner Bolte Nürnberg
(86) International application number: PCT/US2018/052256
(87) International publication number: WO 2019/060752

(56) References cited:
- FR-A1- 2 128 431
- US-A- 5 481 887
- US-A1- 2013 186 128
- US-A1- 2016 047 575

## Description

### CROSS-REFERENCE TO RELATED PATENT APPLICATION

This application claims the benefit of and priority to U.S. Provisional Application No. 62/562,895 filed September 25, 2017.

### BACKGROUND

Buildings can include heating, ventilation and air conditioning (HVAC) systems.

US 2016/047575 A1 describes a vapor compression system comprising: a compressor having one or more bearing systems supporting a rotor and/or one or more working elements. One or more bearing feed passages are coupled to the bearings to pass fluid along a supply flowpath to the bearings. A mechanical pump is positioned to drive fluid along the supply flowpath. An ejector has a motive flow inlet coupled to the mechanical pump to receive refrigerant from the mechanical pump.

FR 2 128 431 A1 discloses a chiller assembly according to the preamble of claim 1 and relates to a conventional refrigerating compressor oil recovery system using an ejector operated from the high pressure side. In particular, a method is proposed for recycling oil from the evaporator to the compressor of a compression refrigerating plant using an oil-soluble refrigerant, wherein a flow of hot refrigerating gas for the high pressure side of the circuit is used to operate an ejector, thus removing the mixture of vapor and oil from the evaporator (low pressure) to the oil circuit at higher pressure. The ejector is supplied from the vapor space of the condenser or from the delivery side of the compressor.

US 5,481,887 A relates to a conventional compression type refrigerator having an evaporator, a condenser, a compressor for compressing a refrigerant gas, an oil tank for storing a lubricating oil, and an oil supply device connected to the oil tank for supplying the lubricating oil to the compressor by an oil pump. The discharge side of the oil pump is connected to the oil tank through an ejector. A pipe connected at one end to the evaporator to remove a refrigerant liquid, is connected at the other end to a negative pressure generation portion of the ejector.

US 2013/186128 A1 relates to a conventional chiller comprising a compressor for compressing a refrigerant, an oil separator for separating oil and the refrigerant discharged from the compressor, a condenser for condensing the refrigerant passing through the oil separator, an expander for expanding the refrigerant condensed in the condenser, an evaporator for cooling cold water with the refrigerant expanded in the expander and connected to a demanding place via cold water pipes, an ejector for partially passing the refrigerant compressed in the compressor and connected to the evaporator via an evaporator oil recovery path, an oil recovery path of the oil separator connected in such a manner that the oil lead out of the oil separator passes through the oil recovery path so as to be recovered to the compressor, and an ejector outlet path connected in such a manner that the oil and the refrigerant leaked out of the ejector passes through the ejector outlet path so as to be recovered to the compressor. The oil recovery path of the oil separator and the ejector outlet path are disposed to be able to exchange heat.

### SUMMARY

The invention provides a chiller assembly according to claim 1. Embodiments result from the dependent claims.

### BRIEF DESCRIPTION OF THE DRAWINGS

FIG. 1 is a perspective view drawing of a chiller assembly, according to some embodiments.
FIG. 2 is an elevation view drawing of the chiller assembly of FIG. 1, according to some embodiments.
FIG. 3 is a schematic drawing of a two step oil motive eductor system used in the chiller assembly of FIG. 1, according to some embodiments.
FIG. 4 is a sectional view drawing of a motor and compressor that can be utilized in the two step system of FIG. 3, according to some embodiments.
FIG. 5 is a sectional view drawing of an oil motive eductor used in the two step system of FIG. 3, according to some embodiments.
FIG. 6 is a sectional view drawing of a gas motive eductor used in the two step system of FIG. 3, according to some embodiments.

### DETAILED DESCRIPTION

The present disclosure relates generally to a two step oil motive eductor system for use in a chiller assembly. Chiller assemblies include, among other components, an evaporator, a compressor, a condenser and an expansion device in a closed refrigerant loop. The compressor may include an impeller driven by a motor, and the motor may be supported by oil lubricated bearings that maintain the position of the motor shaft as it rotates and drives the impeller. When the motor is hermetically sealed (e.g., the motor is within the closed refrigerant loop and an airtight housing encapsulates both the compressor and the motor), the bearings must be lubricated and cooled by an internal oil supply system. An internal oil supply system results in the unavoidable exposure of lubricating oil to refrigerant. The presence of lubricating oil in refrigerant reduces the heat transfer capacity of the refrigerant. Meanwhile, the presence of refrigerant in lubricating oil reduces the viscosity of the lubricating oil and can cause cavitation in oil systems. Thus, the oil supply system of a hermetically sealed compressor assembly must be designed to limit the harmful effects caused by the mixing of lubricating oil and refrigerant.

Lubricating oil may be circulated through an internal oil supply system using one or more eductors. Eductors, also known as jet pumps, are pumps without moving parts that can utilize a fluid to perform the work of pumping another fluid according to the principles of the Venturi effect. The Venturi effect is the reduction in fluid pressure (and corresponding increase in velocity) that can result when a fluid flows through a constricted section of a pipe. The fluid being pumped through the eductor is called the suction fluid, while the fluid doing the work is termed the motive fluid and may be a liquid (e.g., oil) or a gas. Avoidance of mechanical pumps in a chiller assembly is beneficial due to a reduction in the complexity in the system and a lower risk of reliability issues due to the lack of moving parts.

Operation of an eductor is as follows: pressurized motive fluid enters an eductor through a motive inlet and enters a nozzle. The nozzle causes the motive fluid to accelerate as it passes through a converging portion of the nozzle. As the motive fluid leaves the nozzle, it enters a suction chamber where it mixes with the suction fluid. Friction between the two types of fluids forces the mixture into a diffuser section which lowers the pressure in the suction chamber and pulls additional suction fluid into the chamber via a suction inlet. The diffuser section is shaped to reduce the velocity of the fluid mixture, correspondingly increasing its pressure at the eductor exit.

Chiller assemblies operate at a refrigerant head pressure that is dependent on a variety of factors, including the local weather conditions of the chiller assembly installation site, and the properties of the refrigerant. For example, the gauge pressure of a typical industrial chiller assembly may range from a minimum of 207 kPa (30 psi) to a maximum of 1,724 kPa (250 psi). During low head operation (e.g., when a low pressure refrigerant is used in the chiller assembly), a gauge pressure differential between the evaporator and the condenser may be 138 kPa (20 psi) or less, resulting in a substantial reduction in performance of gas motive eductors. If the gauge pressure differential between the evaporator and the condenser drops below 34.47 kPa (5 psi), gas motive eductors may cease to function.

In order to overcome low head pressure conditions and move enough refrigerant to reclaim lost oil, large eductor orifices can be used. However, when a gas eductor with a large orifice is discharged into an oil sump, the overall refrigerant flow through the sump can become excessive. Oil motive eductors can work well to overcome a lack of head pressure because they operate at a constant motive pressure, but they are sensitive to mixing shock when refrigerant enters the diffuser portion of the eductor, causing the eductor to choke. A system that removes a large amount of refrigerant load from the oil sump to result in more stable oil suction conditions would be useful.

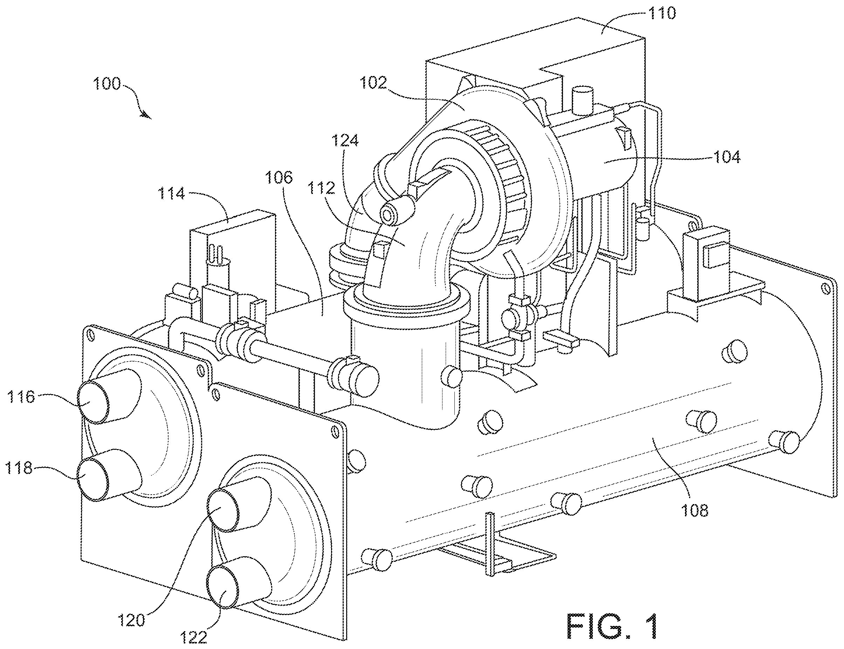

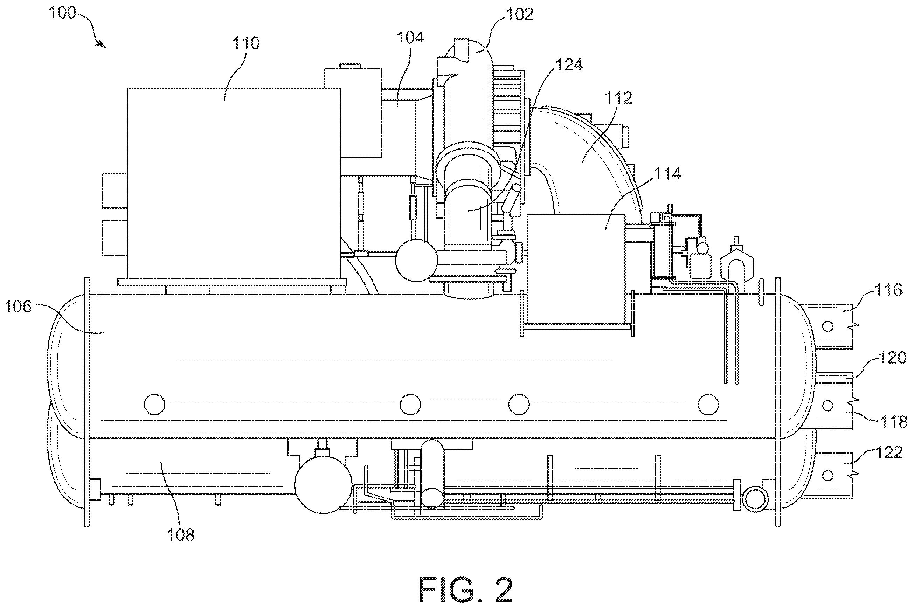

Referring generally to the FIGURES, a chiller assembly having a two step oil motive edutor system is shown. Referring specifically to FIGS. 1-2, an example implementation of a chiller assembly 100 is depicted. Chiller assembly 100 is shown to include a compressor 102 driven by a motor 104, a condenser 106, and an evaporator 108. A refrigerant is circulated through chiller assembly 100 in a vapor compression cycle. Chiller assembly 100 can also include a control panel 114 to control operation of the vapor compression cycle within chiller assembly 100.

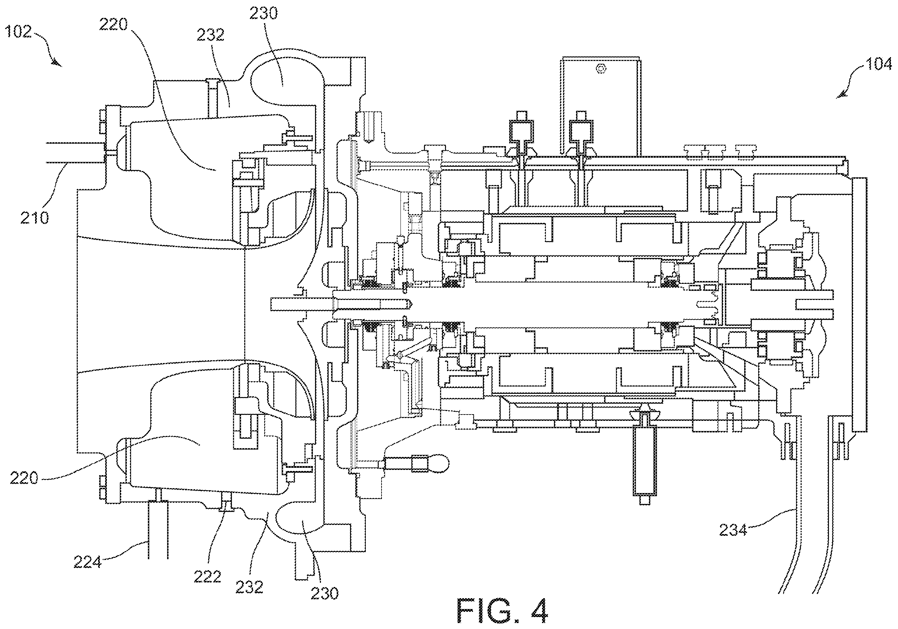

Motor 104 can be powered by a variable speed drive (VSD) 110. VSD 110 receives alternating current (AC) power having a particular fixed line voltage and fixed line frequency from an AC power source (not shown) and provides power having a variable voltage and frequency to motor 104. Motor 104 can be any type of electric motor than can be powered by a VSD 110. For example, motor 104 can be a high speed induction motor. Compressor 102 is driven by motor 104 to compress a refrigerant vapor received from evaporator 108 through suction line 112 and to deliver refrigerant vapor to condenser 106 through a discharge line 124. Compressor 102 can be a centrifugal compressor, a screw compressor, a scroll compressor, or any other type of suitable compressor. For example, in the implementation depicted in FIG. 4, compressor 102 is a centrifugal compressor.

Evaporator 108 includes an internal tube bundle, a supply line 120 and a return line 122 for supplying and removing a process fluid to the internal tube bundle. The supply line 120 and the return line 122 can be in fluid communication with a component within a HVAC system (e.g., an air handler) via conduits that that circulate the process fluid. The process fluid is a chilled liquid for cooling a building and can be, but is not limited to, water, ethylene glycol, calcium chloride brine, sodium chloride brine, or any other suitable liquid. Evaporator 108 is configured to lower the temperature of the process fluid as the process fluid passes through the tube bundle of evaporator 108 and exchanges heat with the refrigerant. Refrigerant vapor is formed in evaporator 108 by the refrigerant liquid delivered to the evaporator 108 exchanging heat with the process fluid and undergoing a phase change to refrigerant vapor.

Refrigerant vapor delivered by compressor 102 to condenser 106 transfers heat to a fluid. Refrigerant vapor condenses to refrigerant liquid in condenser 106 as a result of heat transfer with the fluid. The refrigerant liquid from condenser 106 flows through an expansion device and returns to evaporator 108 to complete the refrigerant cycle of the chiller assembly 100. Condenser 106 includes a supply line 116 and a return line 118 for circulating fluid between the condenser 106 and an external component of the HVAC system (e.g., a cooling tower). Fluid supplied to the condenser 106 via return line 118 exchanges heat with the refrigerant in the condenser 106 and is removed from the condenser 106 via supply line 116 to complete the cycle. The fluid circulating through the condenser 106 can be water or any other suitable liquid.

In some embodiments, the refrigerant has an operating pressure of less than 400 kPa or approximately 58 psi. In further embodiments, the refrigerant is R1233zd. R1233zd is a non-flammable fluorinated gas with low Global Warming Potential (GWP) relative to other refrigerants utilized in commercial chiller assemblies. GWP is a metric developed to allow comparisons of the global warming impacts of different gases, by quantifying how much energy the emissions of 1 ton of a gas will absorb over a given period of time, relative to the emissions of 1 ton of carbon dioxide.

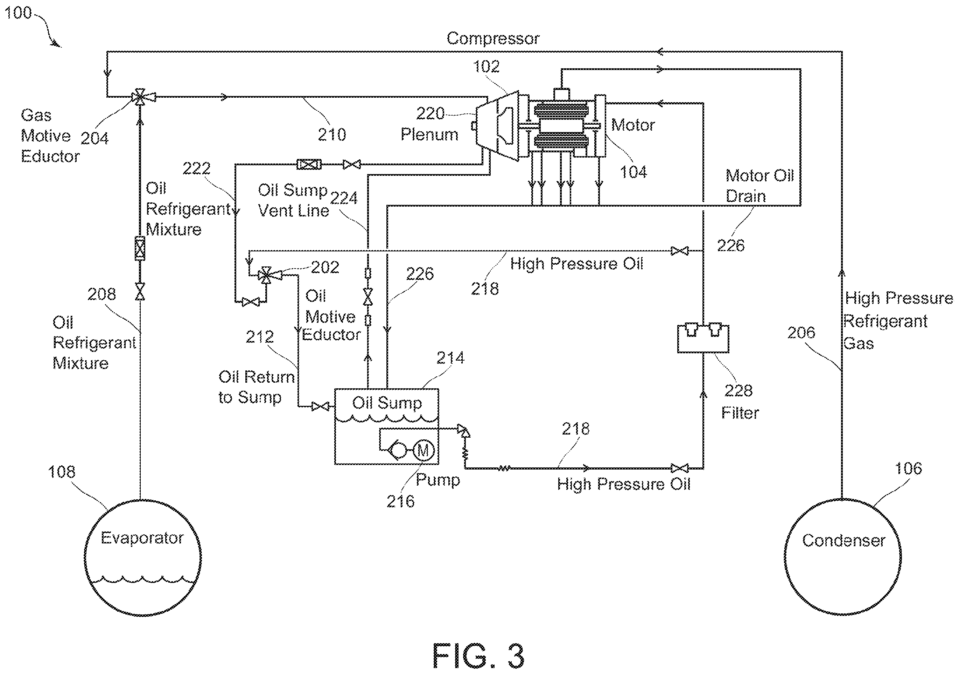

Referring now to FIG. 3, a schematic drawing of a two step oil motive eductor system is depicted. The two step system includes both an oil motive eductor 202 and a gas motive eductor 204. The system operate as follows: an oil and refrigerant mixture is suctioned out of the condenser 108 by a gas motive eductor 204. The oil and refrigerant mixture line 208 may transport a mixture having a range of 0.5 to 2% oil and 98 to 99.5% refrigerant by weight. The motive fluid that generates the suction force through the gas motive eductor 204 may be highly pressurized refrigerant gas 206 supplied from condenser 106.

After exiting the gas motive eductor 204 via line 210, the oil and refrigerant mixture is propelled to a plenum region 220 of the compressor 102. The plenum region 220 is one of the lowest pressure regions in the chiller assembly 100, and can share a wall with a discharge or volute portion of the compressor (shown in further detail with reference to FIG. 4 below). In some embodiments, the wall between the plenum region 220 and the discharge portion may be fabricated from cast iron. The combination of low pressure and heat conducted across the wall to the plenum region 200 may cause a portion of the refrigerant in the oil and refrigerant mixture to boil off in the compressor plenum region 220. In addition to the increase in oil concentration due to the evaporation of refrigerant, the plenum region 220 may act as a natural collector for oil droplets, which may blend with the oil and refrigerant mixture and further increase the relative oil concentration in the oil and refrigerant mixture. For example, in some embodiments, the highly concentrated oil mixture collected in the plenum region 220 may have a range of 33-50% oil and 50-67% refrigerant.

The highly concentrated oil mixture is discharged from the plenum region 220 via line 222 into a suction inlet of an oil motive eductor 202. The highly concentrated oil mixture is propelled through the oil motive eductor 202 by a high pressure motive oil delivered via line 218. The oil motive eductor 202 discharges the highly concentrated oil mixture to an oil sump 214 via a discharge line 212.

The oil sump 214 acts as a reservoir for the collection of lubricating oil and may include a submerged oil pump 216. The submerged oil pump 216 may be configured to discharge pressurized lubricating oil from the sump 214 by utilizing suction generated by the surrounding oil collected in the sump 214. In various embodiments, the oil pump 216 may be configured to operate at all times during chiller operation and may operate at a consistent pressure regardless of the refrigerant head pressure, resulting in a stable motive fluid supplied to the oil motive eductor 202. Oil discharged from the oil sump 214 may pass through a filter 228 before diverging along two separate paths. A first portion of the pressurized oil is delivered to the motor 104 for the purpose of lubricating the rotating components of the motor 104 before returning to the oil sump 214 by motor oil drain lines 226. As described above, a second portion of the pressurized oil is delivered to the oil motive eductor 202 to act as a motive fluid for the highly concentrated oil and refrigerant mixture exiting the plenum region 220 via line 222.

The two step oil motive eductor system is further shown to include an oil sump vent line 224 that fluidly couples the oil sump 214 to the compressor 102. The oil sump vent line 224 may be configured to discharge refrigerant vapor from the oil sump 214. As compared with higher pressure refrigerants, a low pressure refrigerant (e.g., R1233zd) requires a greater quantity of refrigerant to be vented from the oil sump 214 in order to ensure optimal operation of the oil sump 214 and oil pump 216. By supplying the oil sump 214 with a highly concentrated oil mixture from the oil motive eductor 202 via line 212, the amount of refrigerant supplied to the oil sump 214 is minimized, and the size (e.g., diameter) of the oil sump vent line 224 may be correspondingly minimized.

Referring now to FIG. 4, a sectional view drawing of a compressor 102 and a motor 104 that can be utilized in the two step system of FIG. 3 is shown, according to some embodiments. As described above, the motor 104 is a hermetically sealed high speed induction motor, while the compressor 102 is a centrifugal compressor. In other embodiments, the chiller assembly 100 may include a different type of motor and/or type of compressor.

The compressor 102 includes a plenum region 220. The plenum region 220 receives heat from the discharge or volute portion 230 of the compressor 102, and thus may provide a convenient region to boil off excess refrigerant in the oil and refrigerant mixture discharged from the gas motive eductor 204 and received using line 210. Heat may conducted by the plenum wall 232, which may be fabricated from cast iron. In other embodiments, the components of the compressor 102, including the plenum wall 232, may be fabricated from another suitable material. After the excess refrigerant has been boiled off in the plenum region 220, the resulting oil and refrigerant mixture is discharged from the compressor 102 using line 222. The compressor 102 and motor 104 assembly depicted in FIG. 4 is further shown to include two vent lines. Oil sump vent line 224 may discharge excess refrigerant vapor from the oil sump to the plenum region 220, while motor housing vent line 234 may discharge excess refrigerant vapor from the housing of motor 104 to the evaporator.

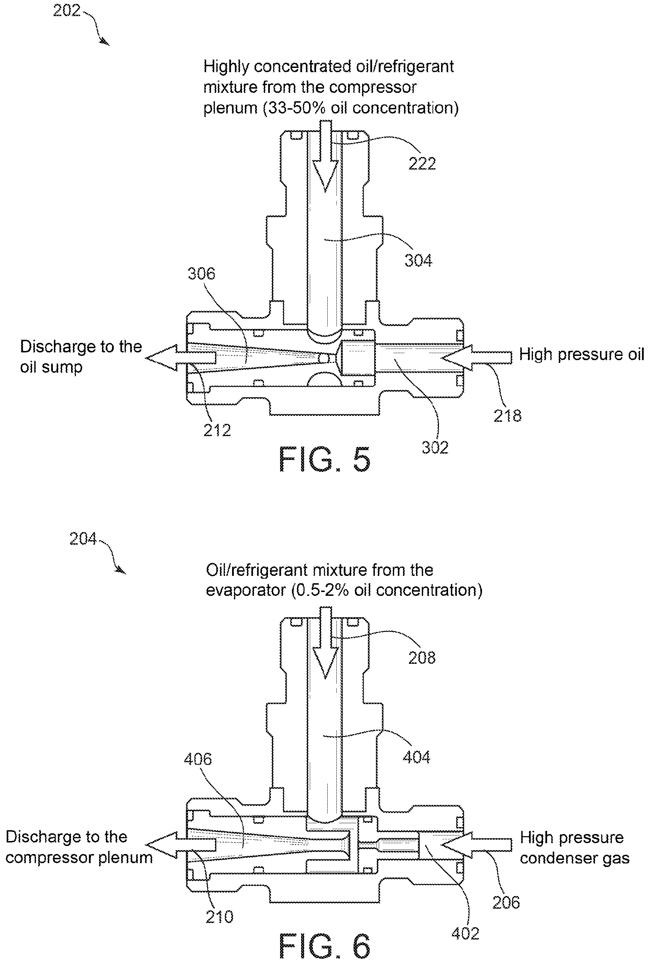

FIG. 5 is a sectional view drawing of the oil motive eductor 202 that is used in the two step system of FIG. 3. Oil motive eductor 202 is shown to include a motive inlet 302, a suction inlet 304, and a diffuser outlet 306. Motive inlet 302 receives high pressure oil from the oil sump 214 via line 218, while suction inlet 304 receives a highly concentrated oil and refrigerant mixture from the compressor plenum 220 via line 222. In some implementations, the highly concentrated oil and refrigerant mixture received via line 222 includes a range of 33-50% oil and 50-67% refrigerant. Diffuser outlet 306 subsequently discharges a mixture of the highly concentrated oil and refrigerant mixture and the motive oil back to the oil sump 214 via line 212.

FIG. 6 is a sectional view drawing of the gas motive eductor 204 that is used in the two step system of FIG. 3. Similar to the oil motive eductor 202 described above with reference to FIG. 5, the gas motive eductor 204 includes a motive inlet 402, a suction inlet 404, and a diffuser outlet 406. Motive inlet 402 receives high pressure refrigerant gas from the condenser 106 via line 206, while suction inlet 404 receives an oil and refrigerant mixture from the evaporator 108 via line 208. As described above, in some implementations, the oil and refrigerant mixture received via line 208 includes a range of 0.5-2% oil and 98-99.5% refrigerant. Diffuser outlet 406 subsequently discharges a mixture of the oil and refrigerant and the condenser gas to the compressor plenum 220 via line 210.

## Claims

1. A chiller assembly (100), comprising:
a compressor (102), wherein the compressor (102) comprises a plenum (220);
a condenser (106);
an evaporator (108);
an oil sump (214);
an eductor system comprising:
- a second eductor (204) comprising:
- a second suction inlet (404) fluidly coupled to the evaporator (108) and configured to receive a second oil and refrigerant mixture from the evaporator (108);
- a second motive inlet (402) fluidly coupled to the condenser (106) and configured to receive a second motive fluid from the condenser (106); and
- a second outlet (406) configured to discharge a second outlet mixture, the second outlet mixture comprising the second oil and refrigerant mixture and the second motive fluid;
wherein the compressor (102), the condenser (106), and the evaporator (108) are connected in a closed refrigerant loop,
**characterised in that**
the eductor system comprises:
- a first eductor (202) comprising:
- a first suction inlet (304) fluidly coupled to the plenum (220) of the compressor (102) and configured to receive a first oil and refrigerant mixture from the plenum (220) of the compressor (102);
- a first motive inlet (302) fluidly coupled to the oil sump (214) and configured to receive a first motive fluid from the oil sump (214); and
- a first outlet (306) fluidly coupled to the oil sump (214) and configured to discharge a first outlet mixture to the oil sump (214),
the first outlet mixture comprising the first oil and refrigerant mixture and the first motive fluid;
and further **characterised in that** the second outlet (406) is fluidly coupled to the plenum (220) of the compressor (102) and is configured to discharge the second outlet mixture to the plenum (220) of the compressor (102).

2. The chiller assembly (100) of claim 1,
wherein a percentage of oil in the first oil and refrigerant mixture ranges from 33% to 50%.

3. The chiller assembly (100) of claim 1 or 2,
wherein a percentage of oil in the second oil and refrigerant mixture ranges from 0.5% to 2%.

4. The chiller assembly (100) of one of claims 1 to 3,
wherein the refrigerant is R1233zd.

5. The chiller assembly (100) of one of claims 1 to 4,
wherein the first motive fluid comprises pressurized oil.

6. The chiller assembly (100) of one of claims 1 to 5,
wherein the second motive fluid comprises a pressurized refrigerant gas.

7. The chiller assembly (100) of claim 1, wherein the compressor (102) is a centrifugal compressor and is configured to be driven by a hermetically sealed induction motor (104).

8. The chiller assembly (100) of claim 1, wherein
- the compressor (102) is configured to be driven by a motor (104);
- the oil sump (214) comprises a submerged pump (216) configured to discharge pressurized lubricating oil from the sump by utilizing suction generated by the surrounding oil collected in the oil sump (214);
- an oil sump vent line (224) that fluidly couples the oil sump (214) to the compressor (102) configured to discharge refrigerant vapor from the oil sump (214),
wherein the first motive fluid comprises pressurized oil received via the pump (216), and wherein the second motive fluid comprises pressurized refrigerant gas received from the condenser (106).

9. The chiller assembly (100) of claim 8,
wherein a percentage of oil in the first oil and refrigerant mixture ranges from 33% to 50%, and wherein a percentage of oil in the second oil and refrigerant mixture ranges from 0.5% to 2.0%.

## Patentansprüche

1. Kühlbaugruppe (100), umfassend:
einen Kompressor (102), wobei der Kompressor (102) ein Plenum (220) umfasst;
einen Kondensator (106);
einen Verdampfer (108);
eine Ölwanne (214);
ein Induktorsystem, umfassend:
- einen zweiten Induktor (204), umfassend:
- einen zweiten Saugeinlass (404), der mit dem Verdampfer (108) fluidisch gekoppelt und konfiguriert ist, um eine zweite Öl- und Kühlmittelmischung von dem Verdampfer (108) zu empfangen;
- einen zweiten Antriebseinlass (402), der mit dem Kondensator (106) fluidisch gekoppelt und konfiguriert ist, um ein zweites Antriebsfluid von dem Kondensator (106) zu empfangen; und
- einen zweiten Auslass (406), der konfiguriert ist, um eine zweite Auslassmischung abzulassen,
die zweite Auslassmischung das zweite Öl- und Kühlmittelgemisch und das zweite Antriebsfluid umfasst;
wobei der Kompressor (102), der Kondensator (106) und
der Verdampfer (108) in einem geschlossenen Kühlmittelkreislauf verbunden sind,
**dadurch gekennzeichnet, dass**
das Induktorsystem Folgendes umfasst:
- einen ersten Induktor (202), umfassend:
- einen ersten Saugeinlass (304), der mit dem Plenum (220) des Kompressors (102) fluidisch gekoppelt und konfiguriert ist, um eine erste Öl - und Kühlmittelmischung aus dem Plenum (220) des Kompressors (102) zu empfangen;
- einen ersten Antriebseinlass (302), der mit der Ölwanne (214) gekoppelt und konfiguriert ist, um ein erstes Antriebsfluid aus der Ölwanne (214) zu empfangen; und
- einen ersten Auslass (306), der mit der Ölwanne (214) gekoppelt und konfiguriert ist, um eine erste Auslassmischung in die Ölwanne (214) abzulassen,
wobei die erste Auslassmischung die erste Öl- und Kühlmittelmischung und das erste Antriebsfluid umfasst;
und ferner **dadurch gekennzeichnet, dass** der zweite Auslass (406) mit dem Plenum (220) des Kompressors (102) fluidisch gekoppelt und konfiguriert ist, um die zweite Auslassmischung in das Plenum (220) des Kompressors (102) abzulassen.

2. Kühlbaugruppe (100) nach Anspruch 1,
wobei der prozentuale Anteil des Öls in der ersten Öl- und Kühlmittelmischung zwischen 33 % und 50 % liegt.

3. Kühlbaugruppe (100) nach Anspruch 1 oder 2,
wobei der prozentuale Anteil des Öls in der zweiten Öl- und Kühlmittelmischung zwischen 0,5 % und 2 % liegt.

4. Kühlbaugruppe (100) nach einem der Ansprüche 1 bis 3,
wobei das Kühlmittel R1233zd ist.

5. Kühlbaugruppe (100) nach einem der Ansprüche 1 bis 4,
wobei das erste Fluid Drucköl umfasst.

6. Kühlbaugruppe (100) nach einem der Ansprüche 1 bis 5,
wobei das zweite Fluid ein unter Druck stehendes Kühlgas umfasst.

7. Kühlbaugruppe (100) nach Anspruch 1, wobei der Kompressor (102) ein Zentrifugalkompressor ist und konfiguriert ist, um von einem hermetisch abgedichteten Induktionsmotor (104) angetrieben zu werden.

8. Kühlbaugruppe (100) nach Anspruch 1, wobei
- der Kompressor (102) für den Antrieb durch einen Motor (104) ausgelegt ist;
- die Ölwanne (214) eine Tauchpumpe (216) umfasst, die konfiguriert ist, um unter Druck stehendes Schmieröl aus der Wanne abzulassen, indem sie den Sog nutzt, der durch das in der Ölwanne (214) gesammelte Umgebungsöl erzeugt wird;
- eine Ölsumpfentlüftungsleitung (224), die die Ölwanne (214) mit dem Kompressor (102) fluidisch koppelt und so konfiguriert ist, dass sie Kühlmitteldampf aus der Ölwanne (214) ablässt,
wobei das erste Fluid unter Druck stehendes Öl umfasst, das über die Pumpe (216) empfangen wird, und wobei das zweite Fluid unter Druck stehendes Kühlmittelgas umfasst, das von dem Kondensator (106) empfangen wird.

9. Kühlbaugruppe (100) nach Anspruch 8,
wobei der prozentuale Ölanteil in der ersten Öl- und Kühlmittelmischung im Bereich von 33 % bis 50 % liegt, und wobei der prozentuale Ölanteil in der zweiten Öl- und Kühlmittelmischung im Bereich von 0,5 % bis 2,0 % liegt.

## Revendications

1. Ensemble réfrigérateur (100) comprenant :
un compresseur (102), dans lequel le compresseur (102) comprend un plénum (220) ;
un condenseur (106) ;
un évaporateur (108) ;
un carter d'huile (214) ;
un système éjecteur comprenant :
- un second éjecteur (204) comprenant :
- une seconde entrée d'aspiration (404) accouplée fluidiquement à l'évaporateur (108) et conçue pour recevoir un second mélange d'huile et de réfrigérant de l'évaporateur (108) ;
- une seconde entrée motrice (402) accouplée fluidiquement au condenseur (106) et conçue pour recevoir un second fluide moteur du condenseur (106) ; et
- une seconde sortie (406) conçue pour évacuer un second mélange de sortie, le second mélange de sortie comprenant le second mélange d'huile et de réfrigérant et le second fluide moteur ;
dans lequel le compresseur (102), le condenseur (106), et
l'évaporateur (108) sont reliés dans une boucle de réfrigérant fermée,
**caractérisée en ce que**
le système éjecteur comprend :
- un premier éjecteur (202) comprenant :
- une première entrée d'aspiration (304) accouplée fluidiquement au plénum (220) du compresseur (102) et conçue pour recevoir un premier mélange d'huile et de réfrigérant du plénum (220) du compresseur (102) ;
- une première entrée motrice (302) accouplée fluidiquement au carter d'huile (214) et conçue pour recevoir un premier fluide moteur du carter d'huile (214) ; et
- une première sortie (306) accouplée fluidiquement au carter d'huile (214) et conçue pour évacuer un premier mélange de sortie vers le carter d'huile (214),
le premier mélange de sortie comprenant le premier mélange d'huile et de réfrigérant et le premier fluide moteur ;
et **caractérisé en outre en ce que** la seconde sortie (406) est accouplée fluidiquement au plénum (220) du compresseur (102) et est conçue pour évacuer le second mélange de sortie vers le plénum (220) du compresseur (102).

2. Ensemble réfrigérateur (100) selon la revendication 1,
dans lequel un pourcentage d'huile dans le premier mélange d'huile et de réfrigérant va de 33 % à 50 %.

3. Ensemble réfrigérateur (100) selon la revendication 1 ou 2,
dans lequel un pourcentage d'huile dans le second mélange d'huile et de réfrigérant va de 0,5 % à 2 %.

4. Ensemble réfrigérateur (100) selon l'une quelconque des revendications 1 à 3,
dans lequel le réfrigérant est le R1233zd.

5. Ensemble réfrigérateur (100) selon l'une quelconque des revendications 1 à 4,
dans lequel le premier fluide moteur comprend de l'huile sous pression.

6. Ensemble réfrigérateur (100) selon l'une quelconque des revendications 1 à 5,
dans lequel le second fluide moteur comprend un gaz réfrigérant sous pression.

7. Ensemble réfrigérateur (100) selon la revendication 1,
dans lequel le compresseur (102) est un compresseur centrifuge et est conçu pour être entraîné par un moteur à induction hermétiquement scellé (104).

8. Ensemble réfrigérateur (100) selon la revendication 1, dans lequel
- le compresseur (102) est conçu pour être entraîné par un moteur (104) ;
- le carter d'huile (214) comprend une pompe immergée (216) conçue pour évacuer l'huile lubrifiante sous pression du carter en utilisant l'aspiration générée par l'huile environnante collectée dans le carter d'huile (214) ;
- une conduite d'aération de carter d'huile (224) qui accouple fluidiquement le carter d'huile (214) au compresseur (102) conçu pour évacuer la vapeur réfrigérante du carter d'huile (214),
dans lequel le premier fluide moteur comprend de l'huile sous pression reçue par le biais de la pompe (216), et dans lequel le second fluide moteur comprend du gaz réfrigérant sous pression reçu du condenseur (106).

9. Ensemble réfrigérateur (100) selon la revendication 8,
dans lequel un pourcentage d'huile dans le premier mélange d'huile et de réfrigérant va de 33 % à 50 %, et dans lequel un pourcentage d'huile dans le second mélange d'huile et de réfrigérant va de 0,5 % à 2,0 %.
